**Europäisches Patentamt**

**European Patent Office**

**Office européen des brevets**

(19)

(11) Veröffentlichungsnummer: **0 144 618**
**B1**

(12) **EUROPÄISCHE PATENTSCHRIFT**

(45) Veröffentlichungstag der Patentschrift:
**24.06.87**

(51) Int. Cl.⁴: **B 65 H 81/00**

(21) Anmeldenummer: **84112139.5**

(22) Anmeldetag: **10.10.84**

(54) **Wickelmaschine zum Wickeln zylindrischer Bauteile.**

(30) Priorität: **13.12.83 DE 3345011**

(43) Veröffentlichungstag der Anmeldung:
**19.06.85 Patentblatt 85/25**

(45) Bekanntmachung des Hinweises auf die Patenterteilung:
**24.06.87 Patentblatt 87/26**

(84) Benannte Vertragsstaaten:
**FR GB IT SE**

(56) Entgegenhaltungen:
**DE - A - 1 499 065**
**GB - A - 2 085 397**
**US - A - 4 359 356**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Wackerle, Peter Martin, Oderweg 7,
D-8012 Ottobrunn (DE)**
Erfinder: **Sperber, Franz, Schwarzenbergstrasse 29,
D-8208 Kolbermoor (DE)**
Erfinder: **Weber, Walter, Eberhardstrasse 12,
D-8017 Ebersberg (DE)**

ACTORUM AG

# Beschreibung

Die Erfindung bezieht sich auf eine Maschine zum Wickeln zylindrischer Bauteile aus faserverstärktem Kunststoff auf einem Wickeldorn mit einer parallel zum Wickeldorn hin- und herbeweglichen Fadenführungseinrichtung für den aufzuwickelnden Faserstrang, wobei der Faserstrang an einem Axialabschnitt des Wickeldorns mit nicht geodätischer Spur ablegbar ist.

Auf der glatten Oberfläche eines zylindrischen Wickeldorns bewegt sich ein unter Zugspannung stehender Faserstrang zwischen zwei Punkten auf eine Spur zu, die die beiden Punkte auf dem kürzesten Weg verbindet. Diese Spur wird als geodätische Spur bezeichnet.

Aus der DE-A-1 490 065 ist eine Vorrichtung der eingangs genannten Art bekannt. Die Ablage des Faserstrangs auf dem zylindrischen Wickeldorn erfolgt dabei geodätisch, nicht jedoch bei der Wicklung, bei der die Fadenführungseinrichtung ihre Bewegungsrichtung umkehrt. Die nicht geodätische Ablage der Wicklung ist jedoch völlig undefiniert.

Mitunter ist es erforderlich, den Faserstrang am Wickeldorn definiert auf einer nicht geodätischen Spur abzulegen, und zwar nicht nur die bei der Umkehr der Bewegungsrichtung der Fadenführungseinrichtung gewickelte Wicklung, beispielsweise wenn ein Bauteil, das in Axialrichtung unterschiedliche Aussendurchmesser aufweist, mit einem bestimmten Wickelmuster gewickelt werden soll.

Unter Wickelmuster ist dabei die Aufteilung des Wickeldornumfangs in gleiche Teile durch die Aneinanderreihung mehrerer Anschläge zu verstehen. Die Grösse eines Wickelmusters stellt man am einfachsten durch Abzählen der Karos eines Wickeldornumfangs fest. Unter einem Anschlag ist die Tätigkeit der Wickelmaschine während einer Hin- und Herbewegung der Fadenführungseinrichtung zu verstehen.

Der Erfindung, wie sie in den Ansprüchen gekennzeichnet ist, liegt die Aufgabe zugrunde, eine Wickelmaschine anzugeben, mit der Faserstränge nicht geodätisch ablegbar sind, so dass z.B. ein bestimmtes Wickelmuster auch bei sich in Axialrichtung änderndem Durchmesser des Bauteils erzielbar ist.

Nachstehend ist die Erfindung anhand der beigefügten Zeichnung näher erläutert. Darin zeigen:

Fig. 1 einen Teil eines Bauteils, das eine Ablage des Faserstrangs mit nicht geodätischer Spur erfordert; und

Fig. 2 eine Draufsicht auf eine Ausführungsform der erfindungsgemässen Wickelmaschine in schematischer Wiedergabe.

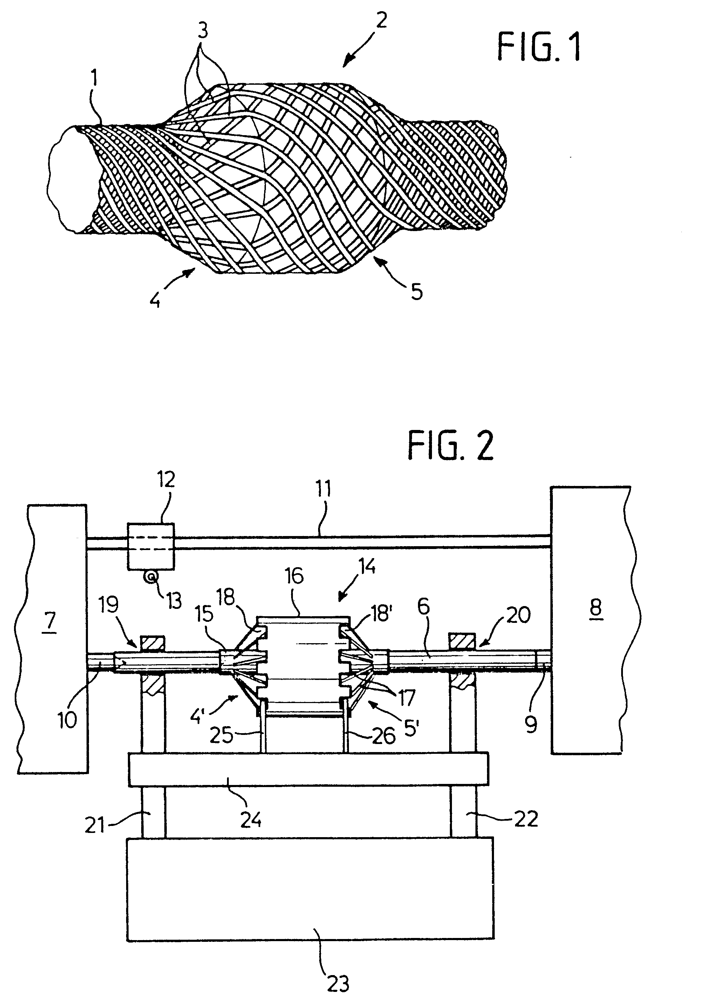

In Fig. 1 ist ein Rohr 1 mit einem Abschnitt 2 mit vergrössertem Durchmesser als Beispiel für ein Bauteil dargestellt, das mit der erfindungsgemässen Wickelmaschine gewickelt werden kann. Am Abschnitt 2 des Rohres 1 mit vergrössertem Durchmesser wie im übrigen Bereich des Rohres 1 ist ein bestimmter Wickelwinkel des Faserstrangs 3 von z.B. ± 45° gegenüber der Rohrlängsachse vorhanden.

Der Abschnitt 2 kann z.B. ein Element darstellen, das bei Einwirkung einer bestimmten Biege- und/ oder Axiallast auf das Rohr 1 bricht.

Wie Fig. 1 zu entnehmen ist, weist der Abschnitt 2 ein Wickelmuster ohne Fortschrittsgrad auf. Das heisst, bei jedem Anschlag legt sich der Faserstrang 3 immer genau auf den zuvor abgelegten Faserstrang 3. Im Bereich des Abschnitts 2 erhält man dadurch keine geschlossene Bedeckung, sondern ein sogenanntes Korb- oder Gittermuster der Faserstränge 3.

Damit das Rohr 1 im Bereich des Abschnitts 2 bzw. Elements die notwendigen Torsionskräfte zu übertragen in der Lage ist, ist es erforderlich, dass die Spitzen der in Form dreieckförmiger Elemente ausgebildeten, gitterförmig übereinanderliegenden Faserstränge 3 an den Stirnflächen 4 und 5 des Abschnitts 2 genau auf den Aussenkanten der Stirnflächen 4 und 5 liegen.

Die Spur des Faserstrangs 3 zwischen dem Rohrabschnitt mit geringem, normalem Durchmesser und dem Abschnitt 2 mit vergrössertem Durchmesser weicht also insbesondere im Bereich der Aussenkanten der Stirnflächen 4 und 5 von der geodätischen Spur erheblich ab.

Gemäss Fig. 2 ist ein Wickeldorn 6 in einer Wickelmaschine so eingespannt, dass er um seine Längsachse drehbar ist. Mit 7 und 8 sind Teile des Maschinengestells der Wickelmaschine bezeichnet, in denen die Arbeitsspindel 9 bzw. die axial verschiebbare Spannspindel 10 drehbar gelagert sind.

Der Wickeldorn 6 ist dabei drehfest mit der Arbeitsspindel 9 verbunden, vorzugsweise über eine Hirtverzahnung. An der Spannspindel 10 ist eine Zentrierspitze vorgesehen, die in eine entsprechende kegelige Zentrierbohrung an diesem Ende des Wickeldorns 6 eingreift, wie in Fig. 2 angedeutet.

An der Vorderseite der Wickelmaschine ist eine zur Wickeldorndrehachse parallel verlaufende Schiene 11 angeordnet, auf der ein Schlitten 12 mit einem Auge 13 hin- und herbeweglich gelagert ist, indem der mit einem Kunstharz getränkte Faserstrang 3 dem Wickeldorn 6 zugeführt wird.

Die Geschwindigkeit der Bewegung des Schlittens 12 und die Umlaufgeschwindigkeit der Arbeitsspindel 9 sind synchronisiert, z.B. über ein Getriebe oder eine elektronische Steuerung.

Auf den Wickeldorn 6 ist ein Stützelement 14 in einer bestimmten Axialposition angeordnet.

Das Stützelement 14 besteht aus einer Innenhülse 15 und einer dazu konzentrischen Aussenhülse 16. Die Innenhülse 15 und die Aussenhülse 16 sind möglichst dünnwandig ausgebildet. Die Stirnflächen 4' und 5' des Stützelements 14 verlaufen vom Bereich der Aussenumfangskanten der Aussenhülse 16 weg leicht konisch nach aussen.

Die Stirnflächen 4' und 5' können dabei durch Speichen 17 gebildet sein, die zwischen der Innenhülse 15 und der Aussenhülse 16 verlaufen.

An den beiden Aussenumfangskanten der Hülse 16 sind in Umfangsrichtung mit gleichem Abstand voneinander angeordnete lückenförmige Ausnehmungen 18 und 18' vorgesehen. Die Breite der Ausnehmungen 18 und 18' entspricht dabei der Breite des Faserstrangs 3 in Umfangsrichtung des Abschnitts 2 an deren Aussenkanten gemäss Fig. 1. An der Innenkante der lückenförmigen Ausnehmungen 18 und 18' sind die Speichen 17 an der Aussenhülse 16 befestigt.

Der Wickeldorn 6 ist in Aufnahmen 19 und 20 gelagert, die an der Oberseite von zwei Armen 21 und 22 vorgesehen sind. Die Arme 21 und 22 sind dabei auf der einen bzw. anderen Seite des Stützelements 14 am antriebsspindelseitigen bzw. spannspindelseitigen Ende des Wickeldorns 6 positioniert. Damit der Wickeldorn 6 in den Aufnahmen 21 und 22 leicht drehbar gelagert ist, sind sie mit einer Oberfläche versehen, die einen geringen Reibungskoeffizienten aufweist.

Die Arme 21 und 22 sind an einer Trageinrichtung 23, z.B. einer Laufkatze, befestigt. Damit die Aufnahmen 19 und 20 vom Wickeldorn 6 weg nach unten bewegt werden können, sind die Arme 19 und 20 um eine zur Wickeldorndrehachse parallele Achse schwenkbar an der Trageinrichtung 23 gelagert.

Um die Arme 21 und 22 vor dem Wickelvorgang aus der Wickelmaschine herausbewegen zu können, ist weiterhin die Trageinrichtung 23 senkrecht zur Wickeldorndrehachse, d.h. zur Drehachse der Wickelmaschine aus derselben heraus verfahrbar.

Zwischen den Armen 21 und 22 erstreckt sich eine Traverse 24. Die Traverse 24 ist in Längsrichtung der Arme 21 und 22 auf den von den Armen 21 und 22 gehaltenen Wickeldorn 6 zu verschiebbar.

Von der Traverse 24 erstrecken sich zwei Stifte 25 und 26 in Richtung des Wickeldorns 6. Die Stifte 25 und 26 sind auf den Wickeldorn 6 zu federbelastet und greifen an der Aussenumfangskante der Aussenhülse 16 des Stützelements 14 an.

Das Stützelement 14 ist so auf dem Wickeldorn 6 angeordnet, dass ein Reibschluss zwischen Stützelement 14 bzw. dessen Innenhülse 15 und dem Wickeldorn 6 vorliegt, der beim Wickelvorgang eine drehfeste Verbindung zwischen Stützelement 14 und Wickeldorn 6 gewährleistet.

Die Wickelmaschine funktioniert folgendermassen:

Zur Zufuhr eines Wickeldorns 6 zur Wickelmaschine wird die Trageinrichtung 23 beispielsweise zu einem nicht dargestellten Förderband verfahren, mit der Wickeldorne zugeführt werden, die mit Stützelementen 14 in der richtigen Axialposition versehen sind. Dann wird bei zurückgezogener Traverse 24 ein Wickeldorn 6 in die Aufnahmen 19 und 20 der Arme 21 und 22 gelegt. Die Traverse 24 wird danach auf den Wickeldorn 6 zu verschoben, so dass die federbelasteten Stifte 25 und 26 entweder in eine der Ausnehmungen 18 und 18' eingreifen oder ausserhalb der Ausnehmungen 18 und 18' an den Aussenkanten der Aussenhülse 16 zur Anlage kommen.

Auf diese Weise werden die Stützelemente 14 während des Transports von dem Förderband zur Wickelmaschine in der richtigen Axialposition fixiert.

Mit der Zufuhreinrichtung, d.h. der Trageinrichtung 23 mit den Armen 21 und 22 wird der Wickeldorn 6 also zur Wickelmaschine befördert und dort von ihr in der Drehachse der Wickelmaschine positioniert. Anschliessend wird die Zentrierspitze der Spannspindel 10 in die entsprechende kegelige Zentrierbohrung am Wickeldornende geschoben, so dass der in Fig. 2 gezeigte Zustand vorliegt.

Danach wird die Arbeitsspindel 9 und damit der Wickeldorn 6 umlaufen gelassen. Falls die federbelasteten Stifte 25 und 26 nicht schon vorher in eine der Ausnehmungen 18 und 18' an der Aussenhülse 16 des Stützelements 14 eingerastet waren, erfolgt dieser Einrastvorgang jetzt. Nach dem Einrasten halten die Stifte 25 und 26 das Stützelement 14 fest, d.h. der Wickeldorn 6 dreht sich im Stützelement 14 bzw. dessen Innenhülse 15.

Wie erwähnt, ist der Antrieb der Arbeitsspindel 9 mit dem Antrieb des Schlittens 12 über ein Getriebe verbunden. Das heisst während der Wickeldorn 6 in dem Stützelement 14 umläuft, bewegt sich der Schlitten 12 entlang der Schiene 11.

Sobald der Schlitten 12 eine bestimmte Position am einen Ende der Schiene 11, nämlich seine Ausgangsposition für den anschliessenden Wickelvorgang, erreicht hat, wird der Antrieb der Arbeitsspindel 9 stillgesetzt. Danach wird die Traverse 24 zurückgefahren, so dass die Stifte 25 und 26 ausser Eingriff mit den Ausnehmungen 18 und 18' kommen. Anschliessend werden die Arme 21 und 22 nach unten verschwenkt und mittels der Trageinrichtung 23 aus der Wickelmaschine herausgefahren.

Auf diese Weise befinden sich die Ausnehmungen 18 und 18' in einer genau definierten Winkelposition gegenüber der Wickelausgangsposition des Schlittens 12. Die Winkelposition der Ausnehmungen 18 und 18' gegenüber der Wickelausgangsposition des Schlittens 12 ist dabei so eingestellt, dass bei dem anschliessend durchgeführten Wickelvorgang der Faserstrang 3 immer exakt in eine Ausnehmung 18 und 18' trifft, und zwar immer in diejenige Ausnehmung, die dem gewünschten Wickelmuster entspricht.

**Patentansprüche**

1. Maschine zum Wickeln zylindrischer Bauteile aus faserverstärktem Kunststoff auf einem Wickeldorn mit einer parallel zum Wickeldorn hin- und herbeweglichen Fadenführungseinrichtung für den aufzuwickelnden Faserstrang, wobei der Faserstrang an einem Axialabschnitt des Wickeldorns mit nichtgeodätischer Spur ablegbar ist, dadurch gekennzeichnet, dass zur nichtgeodätischen Ablage im Bereich des Axialabschnitts auf dem Wickeldorn (6) ein Stützelement (14) und wenigstens ein gegenüber dem sich drehenden Wickeldorn (6) stationär, an dem Stützelement (14) angreifender Anschlag vorgesehen ist, wobei zwischen dem Stützelement (14) und dem Wickeldorn (6) ein Reibschluss vorgesehen ist, der bei am Stützelement (14) angreifendem Anschlag das Stützelement (14) festhält und den Wickeldorn (6) gegenüber dem Stützelement (14) umlaufen lässt jedoch zu einer drehfesten Verbindung zwischen Stützelement (14) und Wickeldorn (6) nach Freigabe des Stützelements (14) durch den Anschlag führt, und wobei das Stützelement (14) an seiner oder seinen Aussenumfangskanten Ausnehmungen (18, 18') aufweist, deren Abstand voneinander in Umfangsrichtung so bemessen ist, dass nach Freigabe des Stützelements (14) durch den Anschlag beim Wickelvorgang eine Ablage des aufzuwickelnden Faserstrangs (3) in den Ausnehmungen (18, 18') erfolgt.

2. Vorrichtung nach Anspruch 1, dadurch gekennzeichnet, dass der Anschlag zum Angriff am Stützelement (14) in eine der Ausnehmungen (18, 18') eingreift.

3. Vorrichtung nach Anspruch 1 oder 2, dadurch gekennzeichnet, dass der Anschlag durch einen oder mehrere auf das Stützelement (14) zu federbelastete Stifte (25, 26) gebildet wird, der bzw. die bei Angriff an der bzw. den Aussenumfangskanten des Stützelements (14) bei Drehung des Wickeldorns (6) in eine der Ausnehmungen (18, 18') einrasten.

4. Vorrichtung nach einem der vorstehenden Ansprüche, dadurch gekennzeichnet, dass der Anschlag bzw. der oder die Stifte (25, 26) an einer Einrichtung zur Zufuhr und Positionierung des mit dem Stützelement (14) versehenen Wickeldorns (6) zu der Wickelmaschine bzw. in deren Drehachse vorgesehen sind.

5. Vorrichtung nach Anspruch 4, dadurch gekennzeichnet, dass die Wickeldorn-Zufuhr- und Positioniereinrichtung Aufnahmen (19, 20) zur drehbaren Halterung des mit dem Stützelement (14) versehenen Wickeldorns (6) aufweist.

6. Vorrichtung nach Anspruch 4 oder 5, dadurch gekennzeichnet, dass die Wickeldorn-Zufuhr- und Positioniereinrichtung eine senkrecht zur Drehachse der Wickelmaschine verfahrbare Trageinrichtung (23) umfasst und die Aufnahmen (19, 20) an zwei an der Trageinrichtung (23) angeordneten Armen (21, 22) vorgesehen sind.

7. Vorrichtung nach Anspruch 6, dadurch gekennzeichnet, dass der Anschlag bzw. der oder die Stifte (25, 26) an einer zwischen den Armen (21, 22) verlaufenden in Armlängsrichtung verschieblichen Traverse (24) angeordnet sind.

### Claims

1. A machine for winding cylindrical component parts made of fibre-reinforced plastics material on a winding mandrel, comprising a thread guide mechanism, movable to and fro parallel to the winding mandrel, for the fibre strand that is to be wound on, in which respect the fibre strand can be deposited on an axial portion of the winding mandrel with a non-geodesic track, characterised in that provided for the non-geodesic deposit in the region of the axial portion on the winding mandrel (6) is a supporting element (14) and at least one stop which is stationary relative to the rotating winding mandrel (6) and which acts on the supporting element (14), in which respect provided between the supporting element (14) and the winding mandrel (6) is a friction locking which, with the stop acting on the supporting element (14), restrains the supporting element (14) and allows the winding mandrel (6) to revolve relative to the supporting element (14), but leads to a torsionally-fast connection between supporting element (14) and winding mandrel (6) after release of the supporting element (14) by the stop, and in which respect the supporting element (14) has, at its outer circumferential edge or edges, recesses (18, 18'), the spacing of which from one another in the circumferential direction is so dimensioned that after release of the supporting element (14) by the stop upon the winding procedure a deposit of the fibre strand (3) that is to be wound on is effected in the recesses (18, 18').

2. Apparatus according to claim 1, characterised in that the stop for acting on the supporting element (14) engages into one of the recesses (18, 18').

3. Apparatus according to claim 1 or 2, characterised in that the stop is formed by one or more pins which is or are spring-loaded towards the supporting element (14) and which upon action on the outer circumferential edge or respectively edges of the supporting element (14) upon rotation of the winding mandrel (6) engages or engage into one of the recesses (18, 18').

4. Apparatus according to one of the above claims, characterised in that the stop or respectively the pin or pins (25, 26) are provided on a mechanism for the feed and positioning of the winding mandrel provided with the supporting element (14) with regard to the winding machine or respectively in the axis of rotation thereof.

5. Apparatus according to claim 4, characterised in that the winding-mandrel feed and positioning mechanism has receivers (19, 20) for the rotary holding of the winding mandrel (6) provided with the supporting element (14).

6. Apparatus according to claim 4 or 5, characterised in that the winding-mandrel feed and positioning mechanism comprises a supporting mechanism (23) which can travel perpendicularly to the axis of rotation of the winding machine and the receivers (19, 20) are provided on two arms (21, 22) arranged on the supporting mechanism (23).

7. Apparatus according to claim 6, characterised in that the stop or respectively the pin or pins (25, 26) are arranged on a traverse (24) which extends between the arms (21, 22) and which is displaceable in the arm longitudinal direction.

### Revendications

1. Machine pour l'enroulement d'éléments préfabriqués cylindriques en matière plastique renforcée de fibres sur un mandrin de bobinage (6), comprenant un dispositif de guidage, pouvant se déplacer en un mouvement de va-et-vient parallèlement au mandrin de bobinage, pour le guidage de l'écheveau de fibres à enrouler, l'écheveau de fibres pouvant être déposé sur une section axiale du mandrin avec piste non géodésique, caractérisée par le fait que, pour la dépose non géodésique dans la zone de la section axiale du mandrin de bobinage (6), il est prévu un élément d'appui (14) et au moins un arrêt qui est stationnaire par rapport au mandrin de bobinage tournant (6) et qui agit sur l'élément d'appui (14), entre l'élément d'appui (14) et le mandrin de bobinage (6) étant prévue une liaison par friction qui, en cas d'arrêt agissant sur l'élément d'appui (14), immobilise l'élément d'appui (14) et laisse tourner le mandrin de bobinage (6) par rapport à l'élément d'appui (14), mais qui, après libération de l'élément d'appui (14) par l'arrêt, provoque un raccordement fixé en rotation entre l'élément d'appui (14) et le mandrin de bobinage (6), et l'élément d'appui (14) comportant sur sa ou ses arête(s) périphérique(s) externe(s) des évitements (18, 18') dont la distance les uns des autres dans le sens périphérique est dimensionnée de manière qu'après libération de l'élément d'appui (14) par l'arrêt, il se produise, lors du processus d'enroulement, une dépose de l'écheveau de fil (3) à enrouler dans les évidements (18, 18').

2. Dispositif selon la revendication 1, caractérisé par le fait que l'arrêt, pour agir sur l'élément d'appui (14), s'engage dans l'un des évidements (18, 18').

3. Dispositif selon la revendication 1 ou 2, caractérisé par le fait que l'arrêt est formé par une ou plusieurs cheville(s) (25, 26) qui sont soumises à l'action d'un ressort en direction de l'élément d'appui (14) et qui, pour agir sur la ou les arête(s) périphérique(s) externe(s) de l'élément d'appui (14) lors de la rotation du mandrin de bobinage (6), s'encliquètent dans l'un des évidements (18, 18').

4. Dispositif selon l'une des revendications précédentes, caractérisé par le fait que l'arrêt ou la ou les cheville(s) (25, 26) sont installés sur un dispositif pour l'amenée et le positionnement du mandrin de bobinage, muni de l'élément d'appui (14), sur le bobinoir ou sur l'axe de rotation de celui-ci.

5. Dispositif selon la revendication 4, caractérisé par le fait que le dispositif d'amenée et de positionnement du mandrin de bobinage comporte des logements (19, 20) pour la fixation, mobile en rotation, du mandrin de bobinage (6) muni de l'élément d'appui (14).

6. Dispositif selon la revendication 4 ou 5, caractérisé par le fait que le dispositif d'amenée et de positionnement du mandrin de bobinage comprend un dispositif-support (23) déplaçable perpendiculairement à l'axe de rotation du bobinoir et que les logements (19, 20) sont aménagés sur deux bras (21, 22) disposés sur le dispositif-support (23).

7. Dispositif selon la revendication 6, caractérisé par le fait que l'arrêt ou la ou les cheville(s) (25, 26) sont placés sur une traverse (24) disposée entre les bras (21, 22) et déplaçable dans le sens longitudinal de ceux-ci.

FIG.1

FIG. 2